**Europäisches Patentamt**

**European Patent Office**

**Office européen des brevets**

(11) Veröffentlichungsnummer: **0 005 696**
A1

## (12) EUROPÄISCHE PATENTANMELDUNG

(21) Anmeldenummer: 79100006.2

(22) Anmeldetag: 01.06.78

(51) Int. Cl.²: **B 60 Q 9/00**
G 01 W 1/14

(43) Veröffentlichungstag der Anmeldung:
12.12.79 Patentblatt 79/25

(84) Benannte Vertragsstaaten:
CH FR GB NL SE

(71) Anmelder: Decker, Peter, Dr.-Ing.
Sausenheimer Strasse 29
D-6718 Grünstadt 1 (DE)

(72) Erfinder: Decker, Peter, Dr.-Ing.
Sausenheimer Strasse 29
D-6718 Grünstadt 1 (DE)

(54) Vorrichtung zum Warnen vor Strassenglätte.

(57) Vorrichtung zum Warnen von Straßenglätte (Eisglätte oder Aqua planing) bestehend aus einer Lichtquelle, die Licht einer bestimmten Wellenlänge aussendet und einem Empfänger, der das von der Straßenoberfläche remittierte Licht empfängt. Sender und Empfänger sind über der Fahrbahnoberfläche z.B. an einem Kraftfahrzeug angebaut. In den ausgesandten Lichtstrahl sind Filter eingebaut, deren Durchlässigkeit so gewählt ist, daß Eis- und/oder Wasserschichten die durchgelassenen Wellenlängen absorbieren und Änderungen im Empfänger dann verursachen, wenn Eis und / oder Wasser auf der Fahrbahnoberfläche vorhanden sind. Die Änderungen der remittierten Lichtstrahlen werden zur Auslösung eines Warnsignals ausgenutzt.

Abb. 1

EP 0 005 696 A1

## VORRICHTUNG ZUM WARNEN
## VOR STRASSENGLÄTTE

Die Erfindung bezieht sich auf eine Vorrichtung zum Warnen vor
Straßenglätte.

Bekannte Vorrichtungen dieser Art (DT-OS 1 906 330, DT-GM 7
218 872) stellen bei Straßenglätte in Form von Eisglätte die
Straßentemperatur bzw. die Temperatur in der Nähe der Straßenoberfläche und gegebenenfalls die relative Luftfeuchtigkeit
fest, um aus diesen Werten Rückschlüsse auf eine mögliche Glättebildung zu ziehen. Der Nachteil dieser Systeme ist, daß keine
Aussage darüber gemacht werden kann, ob die Straße tatsächlich
glatt ist. Es wird lediglich angezeigt, daß die Voraussetzungen
für eine Glatteisbildung gegeben sind.

Andere bekannte Vorrichtungen dieser Art (DT-OS 1 936 255,
DT-OS 2 229 386) verwenden ein am Fahrzeug befestigtes, mit der
Straßenoberfläche in Berührung stehendes zusätzliches Teil, welches auf Änderungen der Adhäsion mit der Straßenoberfläche anspricht. Verwendet wird beispielsweise ein durch einen Haltearm
mit der Fahrbahnoberfläche in Berührung gehaltener Gleitschuh,
wobei die durch die Reibung des Gleitschuhs auf der Oberfläche
hervorgerufene Zugkraft gemessen und als Maß für die Adhäsion zwischen
Gleitschuh- und Fahrbahnoberfläche verwendet wird. Üblich ist es
auch, anstelle eines solchen Gleitschuhs eine Rolle oder ein Schlepprad zu verwenden, welches unter der Einwirkung verschiedener Federn auf der Straßenoberfläche abrollt. Dabei wird das mehr oder
weniger starke Ausschwenken des Schlepprades als Maß für die Adhäsion zwischen Straße und Schlepprad ausgewertet.

Nachteil dieser bekannten Vorrichtungen ist, daß ein zusätzlicher
Gleitschuh bzw. ein zusätzliches Schlepprad erforderlich ist.

Weitere bekannte Vorrichtungen (DT-OS 24 16 623) nutzen im Falle
von Straßenglätte (Eisglätte oder Straßennässe) den Drehzahlunterschied zwischen einem angetriebenen und einem nicht angetriebenen

Rad aus. Man geht dabei von der Erkenntnis aus, daß der Schlupf zwischen Rad und Fahrbahn bei einem angetriebenen Rad des Kraftfahrzeuges stets zumindest etwas größer ist als bei einem nicht angetriebenen, frei mitlaufenden Rad und daß sich dieser Schlupf mit zunehmender Straßenglätte beim angetriebenen oder abgebremsten Rad erheblich stärker vergrößert als beim frei mitlaufenden Rad.

Nachteil dieser Vorrichtung ist, daß der statische Halbmesser de Räder je nach Abrieb, Luftdruck und Belastung verschieden groß sein kann und daher eine oftmalige Eichung notwendig macht.

Unterschiedlich große Drehmomente je nach gewähltem Gang beeinflussen ebenfalls den Drehzahlunterschied unabhängig von der Straßenglätte.

Ein weiterer Nachteil dieser Vorrichtung besteht darin, daß Dreh zahlunterschiede unabhängig von der Straßenglätte auch dann auftreten, wenn die Räder beim Kurvenfahren eingeschlagen werden.

Aufgabe der vorliegenden Erfindung ist es, eine Vorrichtung der eingangs erwähnten Art in einfacher Weise auszugestalten, wobei die Nachteile bisher bekannter Ausführungen vermieden werden.

Erfindungsgemäß wird diese Aufgabe dadurch gelöst, daß Licht bestimmter Wellenlänge auf die Fahrbahnoberfläche aufgestrahlt, d das von dort zurückgeworfene Licht in einem Empfänger in ein el trisches Signal umgeformt, und daß das bei Straßenglätte (Eisbil dung oder Straßennässe) auf der Fahrbahn entstehende elektrisch Signal dem Kraftfahrzeugführer mittels einer Warneinrichtung er kennbar gemacht wird. Die Vorrichtung wird zweckmäßigerweise di rekt an der Unterseite des Kraftfahrzeuges angebracht. Auch ein stationäre Anordnung ist denkbar.

Bei dieser Vorrichtung macht man sich die Erkenntnis zunutze, Eis geringfügig andere Absorptionsbande aufweist als Wasser un Wasserdampf. Somit ist es möglich, auch bei nasser Fahrbahn de Zeitpunkt der Eisbildung exakt zu erfassen.

Die Absorptionsbande von Eis liegen vorzugsweise bei ca. 0,79 μm
bis 0,81 μm, bei ca. 0,89 μm bis 0,92 μm, bei ca. 1,02 μm bis
1,06 μm und bei ca. 1,26 μm bis 1,29 μm, während die des Wassers
vergleichsweise (entsprechend obiger Reihenfolge) bei ca. 0,74 μm,
ca. 0,84 μm, ca. 0,97 μm und ca. 1,17 μm liegen. Weitere Wellenlängen liegen bei ca. 1,43 μm, ca. 1,94 μm, ca. 2,95 μm, ca. 4,78 μm
und ca. 6,1 μm.

Zur Erfassung der Eisglätte werden die auf die Fahrbahn gestrahlten Lichtimpulse einer gewählten Absorptionswellenlänge von Eis
bei Vorhandensein von Eis auf der Fahrbahn absorbiert und erzeugen
in einem Empfänger einen Spannungs- bzw. Stromschwellwert, der dem
Eingang einer Anzeige- und/oder Warneinrichtung zugeführt wird.
Ebenso wäre es denkbar, Lichtimpulse einer Absorptionswellenlänge
des Wassers bzw. des Wasserdampfes auf die Fahrbahn zu richten,
die dann bei Eisbildung ungedämpft in den Empfänger gelangen und
einen Signalunterschied im Vergleich zur nassen Fahrbahn hervorrufen. Dieser Signalunterschied würde wiederum durch eine Warnvorrichtung zur Anzeige gebracht.

Zur Erfassung der Straßennässe (Aquaplaning) werden die auf die
Fahrbahn gestrahlten Lichtimpulse z.B. einer gewählten Absorptionswellenlänge von Wasser bei Vorhandensein von Wasser auf der Fahrbahn unterschiedlich remittiert und erzeugen in einem Empfänger
einen Spannungs- bzw. Stromwert. Dieser Wert wird mit den Größen:
Reifendrehzahl, Reifenprofiltiefe und Profilformfaktor verglichen
und nach der Verarbeitung als Spannungs- bzw. Stromschwellwert dem
Eingang einer Anzeige- und/oder Warneinrichtung zugeführt.
Der Einfachheit halber können zur Erfassung der Straßennässe auch
Lichtimpulse mit der Absorptionswellenlänge des Eises herangezogen
werden, da Wasser auch bei diesen Wellenlängen, wenngleich unempfindlicher, absorbiert.

Die Lichtimpulse, die sehr schmalbandig sein müssen, werden vorzugsweise von einer gepulsten Laserdiode erzeugt, die zusammen mit dem
Empfänger in sicherem Abstand von der Straßenoberfläche angeordnet
ist.

Die Absorptionsbande von Eis liegen vorzugsweise bei ca. 0,79 µm bis 0,81 µm, bei ca. 0,89 µm bis 0,92 µm, bei ca. 1,02 µm bis 1,06 µm und bei ca. 1,26 µm bis 1,29 µm, während die des Wassers vergleichsweise (entsprechend obiger Reihenfolge) bei ca. 0,74 µm, ca. 0,84 µm, ca. 0,97 µm und ca. 1,17 µm liegen. Weitere Wellenlängen liegen bei ca. 1,43 µm, ca. 1,94 µm, ca. 2,95 µm, ca. 4,78 µm und ca. 6,1 µm.

Zur Erfassung der Eisglätte werden die auf die Fahrbahn gestrahlten Lichtimpulse einer gewählten Absorptionswellenlänge von Eis bei Vorhandensein von Eis auf der Fahrbahn absorbiert und erzeugen in einem Empfänger einen Spannungs- bzw. Stromschwellwert, der dem Eingang einer Anzeige- und/oder Warneinrichtung zugeführt wird. Ebenso wäre es denkbar, Lichtimpulse einer Absorptionswellenlänge des Wassers bzw. des Wasserdampfes auf die Fahrbahn zu richten, die dann bei Eisbildung ungedämpft in den Empfänger gelangen und einen Signalunterschied im Vergleich zur nassen Fahrbahn hervorrufen. Dieser Signalunterschied würde wiederum durch eine Warnvorrichtung zur Anzeige gebracht.

Zur Erfassung der Straßennässe (Aquaplaning) werden die auf die Fahrbahn gestrahlten Lichtimpulse z.B. einer gewählten Absorptionswellenlänge von Wasser bei Vorhandensein von Wasser auf der Fahrbahn unterschiedlich remittiert und erzeugen in einem Empfänger einen Spannungs- bzw. Stromwert. Dieser Wert wird mit den Größen: Reifendrehzahl, Reifenprofiltiefe und Profilformfaktor verglichen und nach der Verarbeitung als Spannungs- bzw. Stromschwellwert dem Eingang einer Anzeige- und/oder Warneinrichtung zugeführt. Der Einfachheit halber können zur Erfassung der Straßennässe auch Lichtimpulse mit der Absorptionswellenlänge des Eises herangezogen werden, da Wasser auch bei diesen Wellenlängen, wenngleich unempfindlicher, absorbiert.

Die Lichtimpulse, die sehr schmalbandig sein müssen, werden vorzugsweise von einer gepulsten Laserdiode erzeugt, die zusammen mit dem Empfänger in sicherem Abstand von der Straßenoberfläche angeordnet ist.

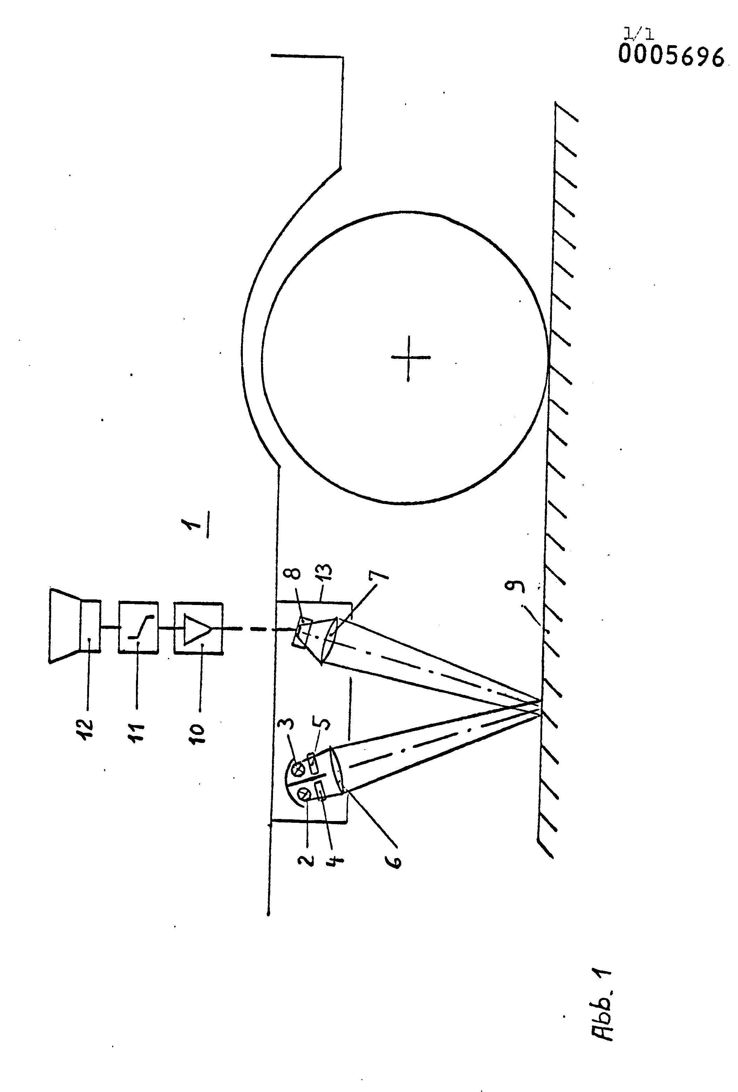

Patentansprüche

1.

Vorrichtung zum Warnen des Führers eines Kraftfahrzeuges vor
Straßenglätte,

g e k e n n z e i c h n e t   d u r c h
eine Lichtquelle (2), durch die Licht einer bestimmten Wellenlänge auf die Fahrbahnoberfläche (9) aufstrahlbar ist, einen
Empfänger (8), durch den das von der Fahrbahn zurückgeworfene
Licht in ein entsprechendes elektrisches Signal umformbar ist
sowie durch eine Warneinrichtung (12), durch die das bei Straßenglättebildung (Eisglätte oder Straßennässe)  auf der Fahrbahn entstehende elektrische Signal dem Kraftfahrzeugführer erkennbar ist.

2.

Vorrichtung nach Anspruch 1
d a d u r c h   g e k e n n z e i c h n e t ,
daß die Wellenlänge der Meßlichtimpulse (2) in einem Absorptionsmaximum des Eises z.B. zwischen ca. 0,79 µm und 0,81 µm bzw.
zwischen ca. 0,89 µm und 0,92 µm, bzw. zwischen ca. 1,02 µm und
1,06 µm bzw. zwischen ca. 1,26 µm und 1,29 µm bei ca. 1,5 µm bzw.
bei ca. 2,0 µm bzw. bei ca. 3,07 µm bzw. bei ca. 4,5 µm bzw. bei
ca. 6,08 µm liegt.

3.

Vorrichtung nach Anspruch 1 und 2
d a d u r c h   g e k e n n z e i c h n e t ,
daß zur Ausschaltung von Störgrößen wie z.B. Fremdlichteinflüsse,
Abstandsänderungen u.a. zusätzlich Vergleichsstrahlimpulse (3)
auf die Fahrbahnoberfläche gestrahlt werden, deren Wellenlänge
in der Nähe der Absorptionsmaxima des Eises liegen, jedoch weder
vom Eis noch vom Wasser bzw. Wasserdampf beeinflußt werden.

4.

Vorrichtung nach Anspruch 1 bis 3

d a d u r c h   g e k e n n z e i c h n e t ,

daß zur Erfassung von Straßennässe (Aquaplaning) zusätzlich
die Größen: Reifendrehzahl, Reifenprofiltiefe und Profilfaktor
als reifenspezifische Größe mit bekannten Methoden erfaßt und
mit dem elektrischen Signal des von der Fahrbahnoberfläche zurückgeworfenen Lichtes verglichen werden.

5.

Vorrichtung nach Anspruch 1 bis 4

d a d u r c h   g e k e n n z e i c h n e t ,

daß die Lichtstrahlen vorzugsweise durch gepulste Laserdioden
erzeugt werden.

6.

Vorrichtung nach Anspruch 1 bis 5

d a d u r c h   g e k e n n z e i c h n e t ,

daß die Lichtimpulse über Infrarotlichtleiter auf die Fahrbahnoberfläche gerichtet und von dort über Infrarotlichtleiter in
den Empfänger (8) geleitet werden.

7.

Vorrichtung nach Anspruch 1 bis 6

g e k e n n z e i c h n e t   d u r c h

die Kombination mit einem Antiblockiersystem derart, daß der erfaßte Wert sowohl der Anzeige- und/oder Warneinrichtung als auch
dem Antiblockiersystem zugeführt ist.

Abb. 1

0005696

EUROPÄISCHER RECHERCHENBERICHT

Nummer der Anmeldung

EP 78 10 0006

Europäisches
Patentamt

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | B 60 Q 9/00 |
| Y | DE - A - 2 137 688 (ELTRO) <br> * Seite 5; Figuren * <br> — | 1 | G 01 W 1/14 |
| A | DE - A - 1 573 871 (SCHMID) <br> * Seite 4; Figuren * <br> — | 1 | |
| A | DE - A - 1 955 273 (SCHMID) <br> * Seite 4; Figuren * <br> — | 1 | |
| A | DE - A - 2 137 689 (ELTRO) <br> * Seite 4; Figuren * <br> — | 1 | RECHERCHIERTE SACHGEBIETE (Int. Cl.³) <br> G 01 W 1 <br> G 08 B 19 <br> B 60 Q 9 |
| A | US - A - 3 540 025 (LEVIN) <br> * Figur 1 * <br> — | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-02-1979 | ONILLON |

EPA form 1503.1 06.78